# EUROPEAN PATENT SPECIFICATION

(11) **EP 1 065 039 B1**
(45) Date of publication and mention of the grant of the patent: **19.01.2005**
(21) Application number: 00113586.2
(22) Date of filing: 27.06.2000
(51) Int. Cl.: B29C 47/00, C08L 15/00, F16L 11/04

(54) **Process for manufacturing a hose of low fuel permeation**
Verfahren zur Herstellung eines Schlauches mit niedriger Kraftstoffpermeabilität
Méthode de fabrication d'un tuyau flexible de basse perméabilité à l'essence

(30) Priority: 28.06.1999 JP 18245099
(43) Date of publication of application: 03.01.2001
(73) Proprietor: Tokai Rubber Industries, Ltd., Komaki-shi, Aichi-ken, 485-8550 (JP)
(72) Inventor: Miyajima, Atsuo, Inuyama-shi, Aichi-ken 484-0894 (JP); Nishiyama, Takahiro, Kasugai-shi, Aichi-ken 486-0903 (JP); Kato, Kazuhiro, Nagoya-shi, Aichi-ken 453-0021 (JP)
(74) Representative: KUHNEN & WACKER

(56) References cited:
- US-A- 4 486 480
- PATENT ABSTRACTS OF JAPAN vol. 1995, no. 01, 28 February 1995 (1995-02-28) & JP 06 286060 A (TOKAI RUBBER IND LTD), 11 October 1994 (1994-10-11)
- DATABASE WPI Derwent Publications Ltd., London, GB; AN 1988-297213 XP002192895 & JP 63 218347 A, 12 September 1988 (1988-09-12)
- DATABASE WPI Derwent Publications Ltd., London, GB; AN 1975-25251w XP002192896 & JP 50 006873 B, 18 March 1975 (1975-03-18)

## Description

### BACKGROUND OF THE INVENTION

### 1. Field of the Invention:

This invention relates to a process for manufacturing a hose of low fuel permeation. More particularly, it relates to a process for manufacturing a hose of low fuel permeation contributing to the achievement of strict control on the leakage of fuel from an automobile, which can overcome any problem that would otherwise occur to the hose because of the properties of its material.

### 2. Description of the Related Art:

Control on the leakage of fuel by permeation from an automobile, which is similar to the SHED control (Shield Housing for Evaporative Determinations) in the United States, is put into practice in Japan and Europe in 2000 A.D. A fuel transporting hose is required to be highly impermeable to fuel, since it is greatly responsible for the leakage of fuel by permeation from an automobile, as is well known.

In Japan or Europe, NBR or NBR-PVC of general specifications is used for a known fuel hose in an automobile, such as a filler, breather or evaporation hose. In the United States in which the SHED control is already in force, however, FKM (fluororubber) or resin is used for the inner layer of a hose, and a blend of NBR and PVC, ECO (epichlorohydrin rubber), CSM (chloro-sulfonated polyethylene rubber), etc. for its outer layer.

The existing specifications for a fuel piping in Japan or Europe fail to achieve any fuel impermeability conforming to the strengthened domestic control as stated above. The United States specifications as stated above can be expected to achieve the fuel impermeability conforming to the control. There are, however, problems, since FKM and a fluororesin are expensive, and FKM or resin used as the inner layer material is difficult to bond to the outer layer material.

The inventors of this invention proposed to blend NBR containing a very large amount of acrylonitrile in the range of 43 to 50% by weight (high-AN (acrylonitrile) NBR) with PVC. The inventors used this inexpensive blend for making a hose, and discovered that it has an excellently low fuel permeability comparable to that of a hose of FKM.

This discovery is applicable to a straight, bending or bellows-like hose having a single- or multi-layer wall structure. Any lowering in properties of a hose containing a very large amount of acrylonitrile at a low temperature can be prevented by employing, for example, an improved plasticizer formulation. These results make it possible to provide a hose of low fuel permeation which overcomes the problems of the prior art as pointed out above.

The blend as mentioned above has, however, been found to involve a new problem associated with the size of a hose. A breather, or evaporation hose usually has an inside diameter of, say, 3 to 20 mm and a wall thickness of, say, 2 to 4 mm. A filler hose having a relatively large diameter has an inside diameter of, say, 20 to 50 mm and a wall thickness of, say, 3 to 5 mm. It has been a matter of common knowledge that an unvulcanized product for a hose having such a size is not deformed by its own weight, but can be extruded for vulcanization under heat without the aid of any mandrel. It has, however, been found that a product formed from the blend as mentioned before, and unvulcanized for a hose is deformed by its own weight, as it has a high AN content.

### SUMMARY OF THE INVENTION

It is, therefore, an object of this invention to provide a process which can manufacture a hose of low fuel permeation from a blend of NBR and PVC containing a very large amount of acrylonitrile without allowing it to be deformed.

A first aspect of this invention resides in a process for manufacturing a straight hose of low fuel permeation having a small diameter, comprising the steps of extrusion molding an unvulcanized product having a rubber layer formed from a blend of acrylonitrile-butadiene rubber (NBR) containing 43 to 50% by weight of acrylonitrile and polyvinyl chloride (PVC); and vulcanizing it under heat, while holding it in the shape required of a hose by a straight thin mandrel inserted therein, and wherein said hose of low fuel permeation has an inside diameter of 3 to 20 mm and a wall thickness of 2 to 4 mm.

The use of NBR having a very high acrylonitrile content in the range of 43 to 50% by weight makes it possible to provide a hose formed from a blend of NBR and PVC which is inexpensive and yet shows an excellently low fuel impermeability. While an unvulcanized product of this kind of rubber composition is very liable to deformation by its own weight, this problem can be overcome by the process as defined above.

A second aspect of this invention resides in a process for manufacturing a straight or curved hose of low fuel permeation having a small diameter, comprising the steps of extrusion molding an unvulcanized product having a rubber layer formed from a blend of acrylonitrile-butadiene rubber (NBR) containing 43 to 50% by weight of acrylonitrile and polyvinyl chloride (PVC); and vulcanizing it under heat, while holding it in the shape required of a hose by fitting it in a groove made in a heating die and having a shape corresponding to the required shape of a hose, and wherein said hose of low fuel permeation has an inside diameter of 3 to 20 mm and a wall thickness of 2 to 4 mm.

The second aspect also makes it possible to provide a hose formed from a blend of NBR and PVC which is inexpensive and yet shows an excellently low fuel permeability. It can also overcome the problem that an unvulcanized product is liable to deformation by its own weight.

A third aspect of this invention resides in a process for manufacturing a straight, bending or partly bellows-shaped hose of low fuel permeation having a small diameter, comprising the steps of injecting a blend of acrylonitrile-butadiene rubber (NBR) containing 43 to 50% by weight of acrylonitrile and polyvinyl chloride (PVC) into a cavity made in a heating die and having a shape corresponding to the shape required of a hose; and vulcanizing a molded product under heat in the heating die, and wherein said hose of low fuel permeation has an inside diameter of 3 to 20 mm and a wall thickness of 2 to 4 mm.

The third aspect also makes it possible to provide a hose formed from a blend of NBR and PVC which is inexpensive and yet shows an excellently low fuel permeability. It can also overcome the problem that an unvulcanized product is liable to deformation by its own weight. It has, moreover, the advantage of being capable of making a hose having a complicated shape, such as a bellows-shaped one.

The above and other advantages of the invention will become more apparent in the following description and the accompanying drawings.

### BRIEF DESCRIPTION OF THE DRAWINGS

FIGS. 1A to 1C are a series of diagrams illustrating a process embodying this invention for manufacturing a hose of low fuel permeation; and
FIGS. 2A to 2D are a series of diagrams illustrating a process embodying this invention for manufacturing a differently shaped hose of low fuel permeation.

### DETAILED DESCRIPTION OF THE INVENTION

The process of this invention for manufacturing a hose of low fuel permeation employs a blend of NBR having an AN content of 43 to 50% by weight (preferably 45 to 48% by weight) and PVC. NBR having too low an AN content may give a hose which is unsatisfactory in fuel impermeability, and the excess of its AN content may give a hose having properties which are too low at a low temperature to be improved by the addition of any plasticizer. The blend of NBR and PVC preferably has a PVC content of 25 to 40% by weight in view of its general ozone resistance.

It is preferable to add 15 to 35 phr (more preferably 20 to 30 phr) of a plasticizer to the blend of NBR and PVC. The addition of the plasticizer makes it possible to prevent any lowering in flexibility of a hose that would occur at a low temperature due to the high AN content of the blend. The addition of too large an amount of plasticizer makes it impossible to maintain any excellent fuel impermeability as expected. Its addition in too small an amount fails to be effective for improving the flexibility of a hose at a low temperature. The plasticizer preferably has an SP value not lower than 8.8, more preferably not lower than 9.0, and a molecular weight not exceeding 550, more preferably not exceeding 450.

NBR-PVC may be filled with reinforcing carbon black, and may further contain various known additives including a vulcanizing agent, a vulcanization accelerator, an antioxidant, as required. There is no limit to the amount of carbon black to be used for filling. It is, however, preferable to find a proper balance between the amount of the plasticizer and that of carbon black to obtain a rubber composition having a hardness (JIS K6253 or ISO 48) of 55 to 75 degrees, insofar as it is used for making a hose of low fuel permeation for an automobile.

### EMBODIMENTS

### [Hose of Low Fuel permeation and a Process for Manufacturing the Same]

A hose of low fuel permeation manufactured by the process of this invention is a hose having a single-layer wall structure formed from NBR-PVC, or a multi-layer wall structure composed of an inner layer formed from NBR-PVC and an outer layer formed from an appropriate rubber material and surrounding the inner layer with or without any reinforcing fiber layer interposed therebetween. The rubber material for the outer layer may be any weather-resistant rubber material of appropriate composition, such as NBR-PVC, CSM or ECO. The third aspect of this invention is not applicable to any hose having a double-layer wall structure.

According to the first aspect of this invention, the hose of low fuel permeation is a straight hose having a small diameter. According to its second aspect, it is a straight or bending hose having a small diameter. According to its third aspect, it is a straight, bending or bellows-shaped hose having a small diameter.

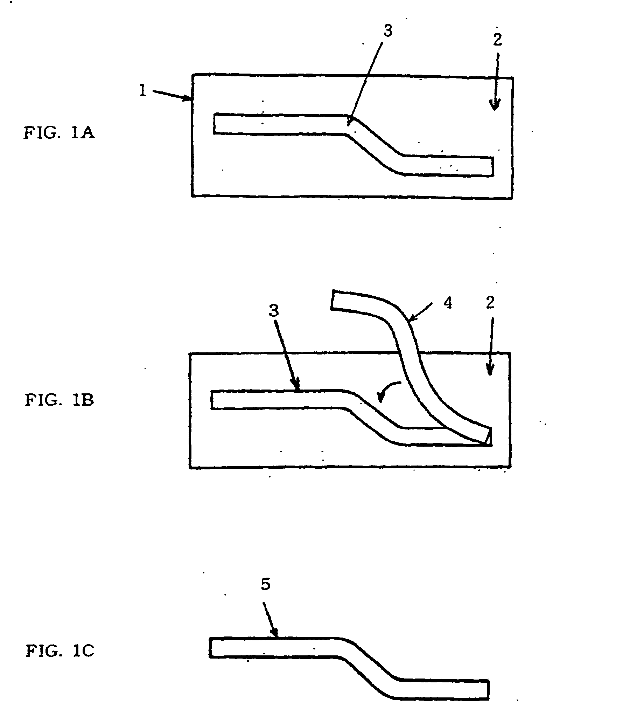

A mode of embodying the second aspect of this invention will now be described by way of the manufacture of a bending hose. A heating die 1 has an appropriately bending groove 3 (for example, a groove having a square or circular cross section) made in its flat molding surface 2, as shown in FIG. 1A. A straight extrusion unvulcanized product 4 for a house is fitted in the groove 3 so as to be held in the shape of a bending hose, as shown in FIG. 1B. The unvulcanized product 4 is, then, heated for vulcanization to give a bending hose 5 of low fuel permeation having a small diameter, as shown in FIG. 1C.

A straight hose can be manufactured by employing the same process as described above, except that the groove 3 is straight.

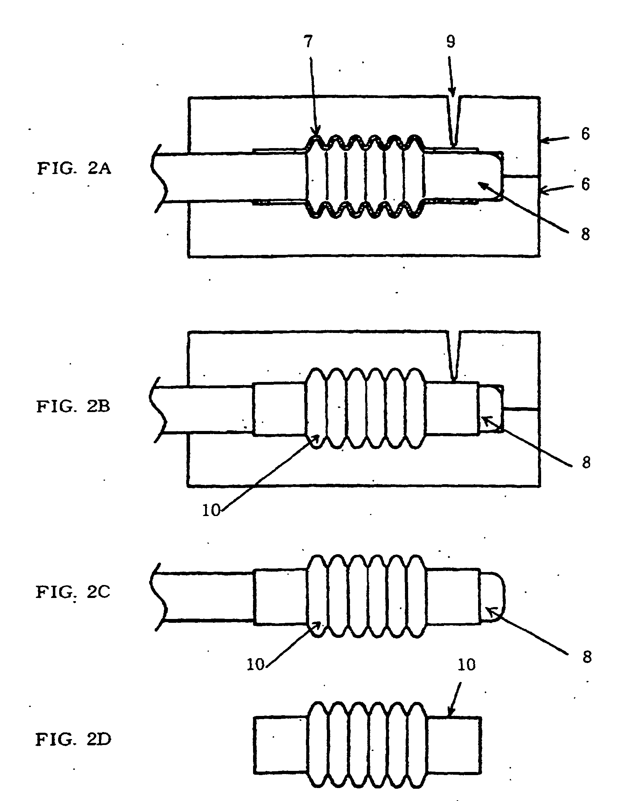

A mode of embodying the third aspect of this invention will now be described by way of the manufacture of a partly bellows-shaped hose. A pair of molding dies 6 capable of heating are so constructed as to define a cavity 7 having a bellows-shaped middle portion and a pair of cylindrical end portions between their mating surfaces, as shown in FIG. 2A. A mandrel 8, which is slightly smaller in size as shown, is inserted in the cavity 7. Unvulcanized NBR-PVC is injected through a gate 9, and the dies 6 are heated for heating it for vulcanization. As a result, there is formed a hose 10 of low fuel permeation having the desired shape, as shown in FIG. 2B. The dies 6 are separated from each other, and the hose 10 is removed therefrom with the mandrel 8, as shown in FIG. 2C. Then, the mandrel 8 is pulled out to give a hose 10 of low fuel permeation as shown in FIG. 2D.

The hose as removed from the dies can further be heated by an appropriate method so that its vulcanization may be accelerated. A straight or bending hose not having any bellows-shaped portion can be manufactured by employing the same process as described above.

Referring to a hose of low fuel permeation according to this invention in size, it may be a hose having (a) an inside diameter of 3 to 20 mm and a wall thickness of 2 to 4 mm, or (b) an inside diameter of 20 to 50 mm and a wall thickness of 3 to 5 mm. The hose having the size (a) is suitable as a breather, or evaporation hose. The hose having the size (b) is suitable as a filler hose.

The first aspect of this invention is preferably employed for making a straight breather or evaporation hose having the size (a). The second aspect thereof is preferably employed for making a straight or bending breather or evaporation hose having the size (a). The third aspect thereof is preferably employed for making an at least partly bellows-shaped hose having the size (b).

## Claims

1. A process for manufacturing a straight hose of low fuel permeation having a small diameter, comprising the steps of:
extrusion molding an unvulcanized product having a rubber layer formed from a blend of acrylonitrile-butadiene rubber (NBR) containing 43 to 50% by weight of acrylonitrile and polyvinyl chloride (PVC); and
vulcanizing said product under heat, while holding it in the shape required of a hose by a straight thin mandrel (8) inserted therein; and
wherein said hose of low fuel permeation has an inside diameter of 3 to 20 mm and a wall thickness of 2 to 4 mm.

2. A process as set forth in claim 1, wherein said hose of low fuel permeation has a single-, or multi-layer wall.

3. A process as set forth in claim 1, wherein said hose of low fuel permeation is a breather or evaporation hose.

4. A process for manufacturing a straight or bending hose (5) of low fuel permeation having a small diameter, comprising the steps of:
extrusion molding an unvulcanized product having a rubber layer formed from a blend of acrylonitrile-butadiene rubber (NBR) containing 43 to 50% by weight of acrylonitrile and polyvinyl chloride (PVC); and
vulcanizing said product under heat, while holding it in the shape required of a hose by fitting it in a groove (3) made in a heating die (1; 6) and having a shape corresponding to said required shape; and
wherein said hose of low fuel permeation has an inside diameter of 3 to 20 mm and a wall thickness of 2 to 4 mm, or an inside diameter of 20 to 50 mm and a wall thickness of 3 to 5 mm.

5. A process as set forth in claim 4, wherein said hose of low fuel permeation has a single-, or multi-layer wall.

6. A process as set forth in claim 4, wherein said hose of low fuel permeation is a breather, evaporation, or filler hose.

7. A process for manufacturing a straight, bending or partly bellows-shaped hose (10) of low fuel permeation having a small diameter, comprising the steps of:
injecting a blend of acrylonitrile-butadiene rubber (NBR) containing 43 to 50% by weight of acrylonitrile and polyvinyl chloride (PVC) into a cavity (7) made in a heating die (1; 6) and having a shape corresponding to the shape required of a hose; and
vulcanizing a molded product under heat in said die (1; 6); and
wherein said hose of low fuel permeation has an inside diameter of 20 to 50 mm and a wall thickness of 3 to 5 mm.

8. A process as set forth in claim 7, further comprising after said vulcanizing the step of heating said product after its removal from said die (1; 6) to accelerate its vulcanization.

9. A process as set forth in claim 7, wherein said hose of low fuel permeation has a single-layer wall.

10. A process as set forth in claim 7, wherein said hose of low fuel permeation is a filler hose.

## Patentansprüche

1. Verfahren zur Herstellung eines geraden Schlauchs mit niedriger Kraftstoffdurchlässigkeit, der einen kleinen Durchmesser aufweist, mit den Schritten:
Extrusionsformen eines unvulkanisierten Produkts, das eine Gummischicht aufweist, die aus einer Mischung von Acrylnitril-Butadien-Gummi (NBR), der 43 bis 50 Gew.% Acrylnitril enthält, und Polyvinylchlorid (PVC) ausgebildet ist; und
Vulkanisieren des Produkts mit Wärme, während es in einer für einen Schlauch erforderlichen Form durch einen geraden dünnen Dorn (8), der darin eingeführt ist, gehalten wird;
wobei der Schlauch mit niedriger Kraftstoffdurchlässigkeit einen Innendurchmesser von 3 bis 20 mm und eine Wandstärke von 2 bis 4 mm aufweist.

2. Verfahren nach Anspruch 1, wobei der Schlauch mit niedriger Kraftstoffdurchlässigkeit eine ein- oder mehrschichtige Wand aufweist.

3. Verfahren nach Anspruch 1, wobei der Schlauch mit niedriger Kraftstoffdurchlässigkeit ein Entlüftungs- oder Verdunstungsschlauch ist.

4. Verfahren zur Herstellung eines geraden oder gebogenen Schlauchs (5) mit niedriger Kraftstoffdurchlässigkeit, der einen kleinen Durchmesser aufweist, mit den Schritten:
Extrusionsformen eines unvulkanisierten Produkts, das eine Gummischicht aufweist, die aus einer Mischung von Acrylnitril-Butadien-Gummi (NBR), der 43 bis 50 Gew.% Acrylnitril enthält, und Polyvinylchlorid (PVC) ausgebildet ist; und
Vulkanisieren des Produkts mit Wärme, während es in der für einen Schlauch erforderlichen Form durch Einfügen in eine Nut (3) gehalten wird, die in einer Heizdüse (1; 6) ausgebildet ist und eine Gestalt aufweist, die mit der erforderlichen Form korrespondiert;
wobei der Schlauch mit niedriger Kraftstoffdurchlässigkeit einen Innendurchmesser von 3 bis 20 mm und eine Wandstärke von 2 bis 4 mm, oder einen Innendurchmesser von 20 bis 50 mm und eine Wandstärke von 3 bis 5 mm aufweist.

5. Verfahren nach Anspruch 4, wobei der Schlauch mit niedriger Kraftstoffdurchlässigkeit eine ein- oder mehrschichtige Wand aufweist.

6. Verfahren nach Anspruch 4, wobei der Schlauch mit niedriger Kraftstoffdurchlässigkeit ein Entlüftungs-, Verdunstungs- oder Füllschlauch ist.

7. Verfahren zur Herstellung eines geraden, gebogenen oder zum Teil blasebalgförmigen Schlauchs (10) mit niedriger Kraftstoffdurchlässigkeit, der einen kleinen Durchmesser aufweist, mit den Schritten:
Einspritzen einer Mischung von Acrylnitril-Butadien-Gummi (NBR), der 43 bis 50 Gew.% Acrylnitril enthält, und Polyvinylchlorid (PVC) in eine Aushöhlung (7), die in einer Heizdüse (1; 6) ausgebildet ist und eine Gestalt aufweist, die mit der für einen Schlauch erforderlichen Form korrespondiert; und
Vulkanisieren eines geformten Produkts mit Wärme in der Düse (1; 6);
wobei der Schlauch mit niedriger Kraftstoffdurchlässigkeit einen Innendurchmesser von 20 bis 50 mm und eine Wandstärke von 3 bis 5 mm aufweist.

8. Verfahren nach Anspruch 7, nach dem Vulkanisieren ferner mit dem Schritt des Erwärmens des Produkts nach seiner Entfernung aus der Düse (1; 6) zur Beschleunigung seiner Vulkanisation.

9. Verfahren nach Anspruch 7, wobei der Schlauch mit niedriger Kraftstoffdurchlässigkeit eine einschichtige Wand aufweist.

10. Verfahren nach Anspruch 7, wobei der Schlauch mit niedriger Kraftstoffdurchlässigkeit ein Füllschlauch ist.

## Revendications

1. Processus de fabrication d'un tuyau flexible rectiligne de basse perméabilité à l'essence présentant un petit diamètre, comprenant les étapes de :
moulage par extrusion d'un produit non vulcanisé ayant une couche de caoutchouc formée à partir d'un mélange de caoutchouc de nitrile acrylique (NBR) contenant 43 à 50 % en poids d'acrylonitrile et de chlorure de polyvinyle (PVC) ; et
vulcanisation dudit produit à la chaleur, tout en le maintenant dans la forme souhaitée d'un tuyau flexible par un mandrin (8) mince rectiligne inséré à l'intérieur de celui-ci ; et
dans lequel ledit tuyau flexible de basse perméabilité à l'essence présente un diamètre intérieur de 3 à 20 mm et une épaisseur de paroi de 2 à 4 mm.

2. Processus selon la revendication 1, dans lequel ledit tuyau flexible de basse perméabilité à l'essence présente une paroi monocouche, ou multicouches.

3. Processus selon la revendication 1, dans lequel ledit tuyau flexible de basse perméabilité à l'essence est un tuyau flexible reniflard ou d'évaporation.

4. Processus de fabrication d'un tuyau flexible (5) rectiligne ou courbé de basse perméabilité à l'essence présentant un petit diamètre, comprenant les étapes de :
moulage par extrusion d'un produit non vulcanisé ayant une couche de caoutchouc formée à partir d'un mélange de caoutchouc de nitrile acrylique (NBR) contenant 43 à 50 % en poids d'acrylonitrile et de chlorure de polyvinyle (PVC) ; et
vulcanisation dudit produit à la chaleur, tout en le maintenant sous la forme souhaitée d'un tuyau flexible en le montant dans une rainure (3) réalisée dans une matrice de chauffage (1 ; 6) et présentant une forme correspondant à ladite forme souhaitée ; et
dans lequel ledit tuyau flexible de basse perméabilité à l'essence présente un diamètre intérieur de 3 à 20 mm et une épaisseur de paroi de 2 à 4 mm, ou un diamètre intérieur de 20 à 50 mm et une épaisseur de paroi de 3 à 5 mm.

5. Processus selon la revendication 4, dans lequel ledit tuyau flexible de basse perméabilité à l'essence présente une paroi monocouche, ou multicouches.

6. Processus selon la revendication 4, dans lequel ledit tuyau flexible de basse perméabilité à l'essence est un tuyau flexible reniflard, d'évaporation, ou de remplissage.

7. Processus de fabrication d'un tuyau flexible (10) rectiligne, courbé ou en partie en forme de soufflet de basse perméabilité à l'essence présentant un petit diamètre, comprenant les étapes de :
injection d'un mélange de caoutchouc de nitrile acrylique (NBR) contenant 43 à 50 % en poids d'acrylonitrile et de chlorure de polyvinyle (PVC) à l'intérieur d'une cavité (7) réalisée dans une matrice de chauffage (1 ; 6) et présentant une forme correspondant à la forme souhaitée d'un tuyau flexible ; et
vulcanisation d'un produit moulé à la chaleur dans ladite matrice (1 ; 6) ; et
dans lequel ledit tuyau flexible de basse perméabilité à l'essence présente un diamètre intérieur de 20 à 50 mm et une épaisseur de paroi de 3 à 5 mm.

8. Processus selon la revendication 7, comprenant en outre après ladite vulcanisation l'étape de chauffage dudit produit après qu'il ait été retiré de ladite matrice (1 ; 6) pour accélérer sa vulcanisation.

9. Processus selon la revendication 7, dans lequel ledit tuyau flexible de basse perméabilité à l'essence présente une paroi monocouche.

10. Processus selon la revendication 7, dans lequel ledit tuyau flexible de basse perméabilité à l'essence est un tuyau flexible de remplissage.
